# EUROPEAN PATENT SPECIFICATION

(11) **EP 3 885 819 B1**
(45) Date of publication and mention of the grant of the patent: **30.08.2023**
(21) Application number: 21186378.2
(22) Date of filing: 19.07.2021
(51) Int. Cl.: G02C 5/22

(54) **SPECTACLE FRAME AND TEMPLE CONNECTING MECHANISM AND EYEGLASSES**
BRILLENGESTELL UND BÜGELVERBINDUNGSMECHANISMUS UND BRILLE
MONTURE DE LUNETTES ET MÉCANISME DE CONNEXION DES BRANCHES ET LUNETTES

(30) Priority: 07.06.2021 CN 202110633644
(43) Date of publication of application: 29.09.2021
(73) Proprietor: Guangdong Jingtai Technology Co., Ltd., Zhongshan City (CN)
(72) Inventor: Chen, Xindong, Zhongshan City (CN); Chen, Xinchuan, Zhongshan City (CN)
(74) Representative: Lin Chien, Mon-Yin

(56) References cited:
- WO-A1-2012/116418
- WO-A1-2017/121306
- CN-U- 204 650 079
- DE-C1- 10 216 514
- US-A1- 2018 210 227
- US-B1- 7 264 349

## Description

### TECHNICAL FIELD

The present invention relates to the technical field of glasses, and in particular to a spectacle frame and temple connecting mechanism and eyeglasses.

### RELATED ART

A pair of eyeglasses in the prior art generally have a spectacle frame and two temples which are hinged together with the spectacle frame, so that the temples can rotate relative to the spectacle frame to fold or open, thus facilitates people's carrying and using of the eyeglasses. However, the eyeglasses in the prior art still have the following shortcomings. 1. Due to the limitation of the connection structure, the temples cannot swing relative to the frame along a plane which is parallel to a hinge shaft, so it is easy to cause damage when the temples are subjected to an upward or downward swinging force. 2. When the eyeglasses are in an open state, heads of the temples are supported on the frame, in this case if the temples are subjected to a outwards swinging force, due to structural limitations, the temples can no longer rotate outwards relative to the frame, which is likely to damage the eyeglasses temples. 3. One end of a temple connecting assembly is fixedly installed in the temple, the temple connecting assembly cannot be removed for repair or replacement once it's damaged, this causes the temple connecting assembly and the temples to be scrapped at the same time, resulting in unnecessary waste of resources.
In the prior art, WO2012116418A1 discloses an elastic hinge with circular moving, wherein a connective element is provided, which enables the temple to perform circular motion relative to the frame, and when the temple is subjected to forces in different directions, the connection structure between the temple and the frame is not easily damaged.

### SUMMARY

The purpose of the present invention is to provide a spectacle frame and temple connecting mechanism and eyeglasses, which can solve the problem in the prior art that the temples cannot swing relative to the spectacle frame along a plane parallel to the hinge shaft, which causes damages easily when stressed.

In order to solve the above problems, the present invention provides a technical solution as defined in claim 1.

A spectacle frame and temple connecting mechanism, comprising a hinge member arranged on a spectacle frame, wherein a temple connecting assembly for connecting the temple is hinged on the hinge member, at a hinge joint between the temple connecting assembly and the hinge member, a temple swing mechanism that enables the temple to swing relative to the spectacle frame along a plane parallel to a hinge shaft is provided.

The spectacle frame and temples connecting mechanism as described above, wherein the temple swing mechanism enables the temple to swing relative to the spectacle frame along a plane parallel to the hinge shaft and prevents an axial play of the temple along the hinge shaft.

The spectacle frame and temple connecting mechanism as described above, wherein the temple swing mechanism includes:
a hinge groove arranged on the hinge member;
a hinge main body hinged in the hinge groove, which is able to swing relative to the spectacle frame along the plane parallel to the hinge shaft;
protrusions provided on both sides of the hinge main body along the axial direction of the hinge shaft, which prevents the axial play of the temple along the hinge shaft;
a hinge shaft radial relief groove provided on the hinge main body or a side wall of the hinge groove, which enables the hinge main body to swing relative to the hinge member.

The spectacle frame and temple connecting mechanism as described above, wherein the hinge main body is provided with a hinge hole for the hinge shaft to pass through, and the hinge shaft radial relief groove is provided on both sides of the hinge hole.

The spectacle frame and temple connecting mechanism as described above, wherein an upper surface of the protrusion (311) is an inclined plane that inclines from the center to the two sides and from high to low with the hinge shaft as the center, and the inclined plane is perpendicular to a swing plane.

The spectacle frame and temple connecting mechanism as described above, wherein the temple connecting assembly includes the hinge main body, and also includes a sleeve movably mounted on the hinge main body; a reset mechanism for driving the hinge body to reset is provided between the hinge body and the sleeve.

The spectacle frame and temple connecting mechanism as described above, wherein the reset mechanism comprises a first stopper and a second stopper provided on the hinge main body, a return spring is arranged between the first stopper and the second stopper, and one end of the sleeve is slidably arranged between the first stopper and the return spring.

The spectacle frame and temple connecting mechanism as described above, wherein the temple is provided with a mounting cavity, and the temple connecting assembly is provided within the mounting cavity.

The spectacle frame and temple connecting mechanism as described above, wherein the temple is provided with a disassembly hole connecting with the mounting cavity on a side wall of the temple, the sleeve is provided with an elastic hook that is engaged with the disassembly hole, and the hinge main body is provided with a relief groove that matches with the elastic hook;
when the temple is connected to the frame, the hinge main body moves away from the mounting cavity, so that the relief groove is misaligned with the elastic hook and the disassembly hole;
when the temple is disconnected from the spectacle frame, the hinge main body moves in the direction of entering the mounting cavity, so that the relief groove is align with the elastic hook and the disassembly hole.

The spectacle frame and temple connecting mechanism as described above, wherein the temple swing mechanism includes:
a hinge groove arranged on the hinge member;
a hinge main body hinged in the hinge groove, which is able to swing relative to the spectacle frame along the plane parallel to the hinge shaft;
protrusions provided on the hinge member and protruding towards the hinge groove along the axial direction of the hinge shaft, which prevents the axial play of the temple along the hinge shaft;
a hinge shaft radial relief groove provided on the hinge main body or a side wall of the hinge groove, which enables the hinge main body to swing relative to the hinge member.

A pair of eyeglasses, including a spectacle frame and at least one temples, wherein further includes an above described spectacle frame and temple connecting mechanism.

Compared with the prior art, the present invention has the following advantages:
1. The spectacle frame and temple connecting mechanism provided by the present invention has a temple swing mechanism and eyeglasses, when the spectacle temple is subjected to an upward or downward swinging force, the spectacle temple can swing relative to the spectacle frame along a plane parallel to the hinge shaft, thereby effectively avoiding damages to the temples, and prolonging the service life of the glasses.
2. In the spectacle frame and temple connecting mechanism and eyeglasses provided by the present invention, the hinge main body is movably connected to the sleeve, and the reset mechanism is arranged between the hinged main body and the sleeve, so that the temples can be expanded without being damaged, and can be restored to a normal state under the action of elastic force to avoid deformation or even damage of the eyeglasses, which is beneficial to improve the user's experience.
3. In the spectacle frame and temple connecting mechanism and eyeglasses provided by the present invention, the temple connecting assembly can realize multiple angles swinging relative to the spectacle frame, such as swing up and down, inside and outside, making it more comfortable for the user to wear, which is beneficial to improve user's experience; besides, a built-in installation structure is adopted, which has few restrictions on the design of the finished eyeglasses and high versatility.
4. The spectacle frame and temple connecting mechanism and eyeglasses provided by the present invention is provided with an easy disassembly and assembly structure, when the temple connecting assembly is damaged, it can be easily removed for repair or replacement, reducing production and maintenance costs, and effectively reducing unnecessary waste of resource.

### BRIEF DESCRIPTION OF THE DRAWINGS

FIG. 1 is a schematic view of a spectacle frame and temple connecting mechanism according to embodiment 1 of the present invention.
FIG. 2 is a cross-sectional view of the spectacle frame and temple connecting mechanism according to embodiment 1 of the present invention.
FIG. 3 is a schematic view of the spectacle frame and temple connecting mechanism in a normal state according to embodiment 1 of the present invention.
FIG. 4 is a schematic view of the spectacle frame and temple connecting mechanism after the temple is subjected to an upward swinging force according to embodiment 1 of the present invention.
FIG. 5 is a first structural schematic view of the temple connecting assembly according to embodiment 1 of the present invention.
FIG. 6 is a second structural schematic view of the temple connecting assembly according to embodiment 1 of the present invention.
FIG. 7 is a structural schematic view of a hinge main body according to embodiment 1 of the present invention.
FIG. 8 is a structural schematic view of a sleeve according to embodiment 1 of the present invention.
FIG. 9 is a first cross-sectional view of the temple connecting assembly and the temple connecting structure according to embodiment 1 of the present invention.
FIG. 10 is a second cross-sectional view of the temple connecting assembly and the temple connecting structure according to embodiment 1 of the present invention.
FIG. 11 is a structural schematic view of a temple swing mechanism according to embodiment 2 of the present invention.

### DETAILED DESCRIPTION

In the following, the technical solutions in the embodiments of the present invention will be described clearly and completely in conjunction with the accompanying drawings in the embodiments of the present invention. Obviously, the described embodiments are only a part of the embodiments of the present invention, rather than all the embodiments. Based on the embodiments of the present invention, all other embodiments obtained by those of ordinary skill in the art without creative work shall fall within the protection scope of the present invention.

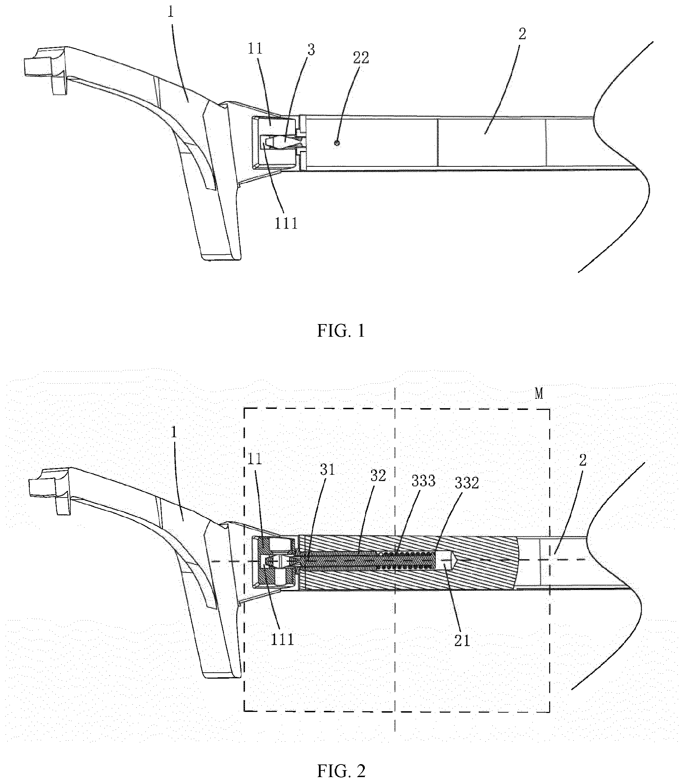

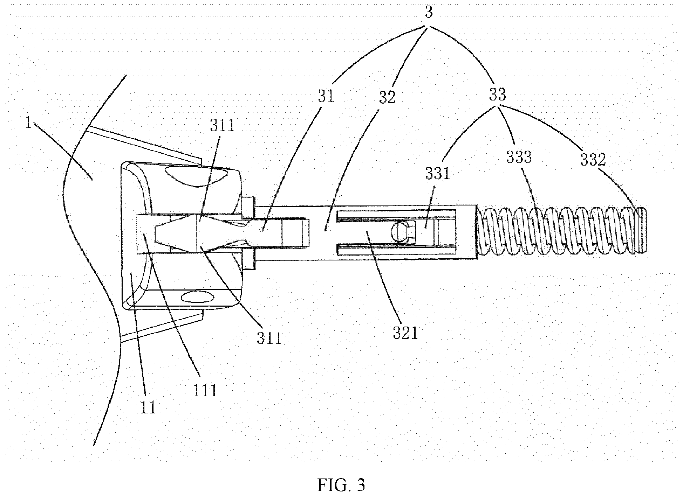

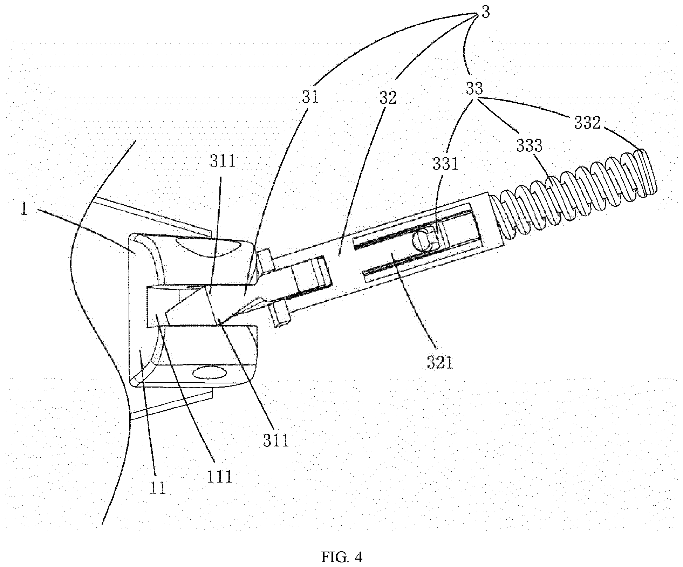

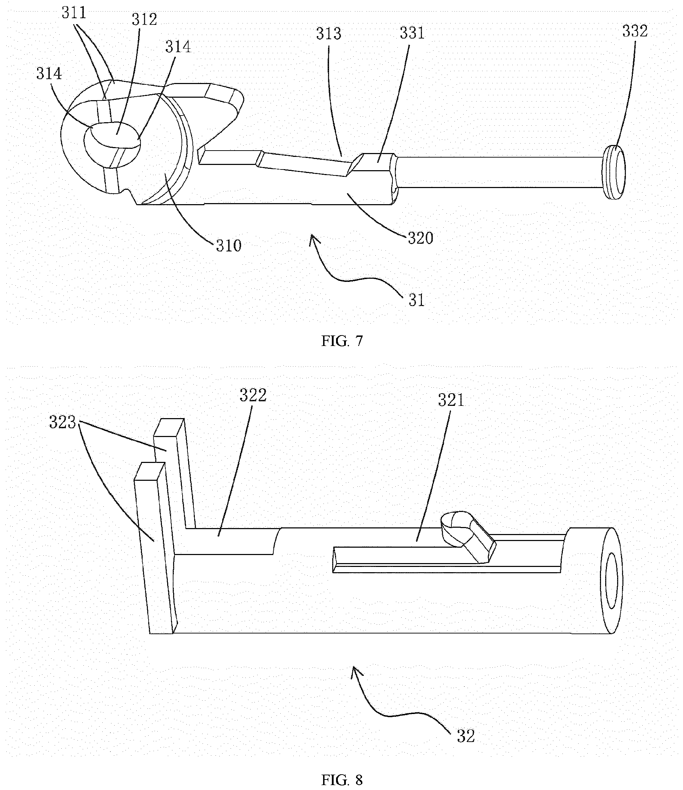

Embodiment 1: Referring to Figures 1 to 10, the embodiment provides a pair of eyeglasses, including a spectacle frame 1, at least one temple 2, and a spectacle frame and temple connecting mechanism. The spectacle frame and temple connecting mechanism includes a hinge member 11 provided on a spectacle frame 1. A temple connecting assembly 3 for connecting the temple 2 is hinged on the hinge member 11, and at a hinged joint between the temple connecting assembly 3 and the hinge member 11, a temple swing mechanism that enables the temple 2 to swing relative to the spectacle frame 1 along a plane parallel to the hinge shaft is provided. When the spectacle temple is subjected to an upward or downward swinging force, the spectacle temple can swing relative to the spectacle frame along a plane parallel to the hinge shaft, thereby effectively avoiding damages to the spectacle temple, and prolonging the service life of the glasses.

Furthermore, the temple swing mechanism not only can enable the temple 2 to swing relative to the spectacle frame 1 along the plane parallel to the hinge shaft, but also can prevent an axial play of the temple 2 along the hinge shaft. The temple can swing relative to the spectacle frame along the plane parallel to the hinge shaft through the temple swing mechanism, and at the same time, the axial play of the temple 2 along the hinge shaft is prevented, which is beneficial to meet both the wearing and swinging needs of customers, and improves user's experience.

Furthermore, the temple swing mechanism includes:
a hinge groove 111 arranged on the hinge member 11;
a hinge main body 31 hinged in the hinge groove 111, which can swing relative to the spectacle frame 1 along the plane parallel to the hinge shaft;
protrusions 311 provided on both sides of the hinge main body 31 along the axial direction of the hinge shaft, which can prevent the axial play of the temple 2 along the hinge shaft;
a hinge shaft radial relief groove 314 provided on the hinge main body 31 or a side wall of the hinge groove 111, which enables the hinge main body 31 to swing relative to the hinge member 11.

The matching of the hinge groove 111, the hinge main body 31, the protrusions 311 and the hinge shaft radial relief groove 314 enables the hinge main body 31 to swing relative to the hinge member 11, thereby meets the wearing and swinging needs of customers, and improves user's experience. The temple swing mechanism of the current embodiment has a simple structure and is convenient for production and processing.

The hinge main body 31 and the hinge member 11 can be hinged in a manner that both the hinge main body 31 and the hinge member 11 are provided with hinge hole, and a pin can be inserted into the hinge hole to connect the hinge main body 31 and the hinge member 11. It may also be that the hinge main body 31 is provided with an integral hinge post arranged along the hinge shaft direction, and the hinge member 11 is provided with a hinge hole. Or, the hinge body 31 is provided with a hinge hole, and the hinge member 11 is provided with an integral hinge post.

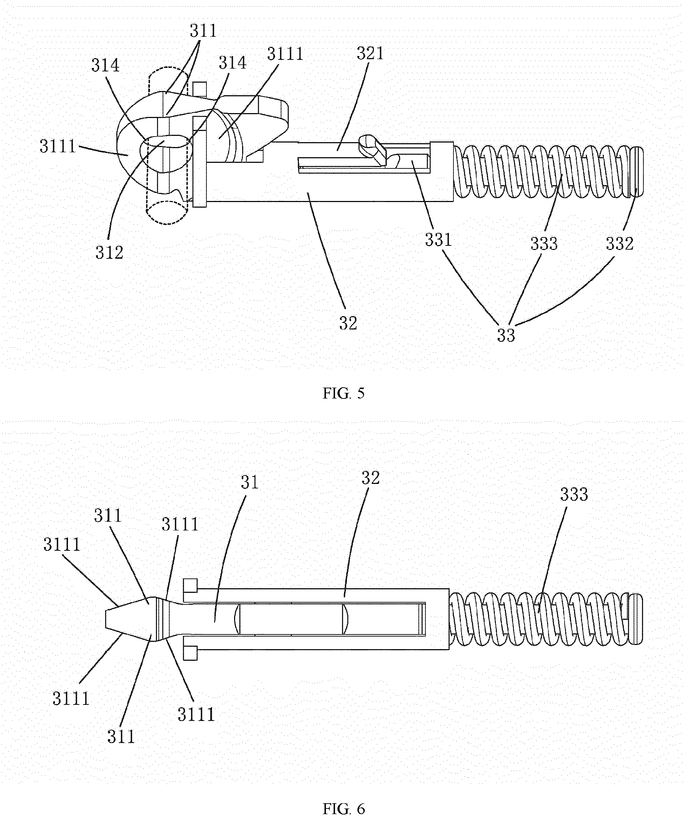

Preferably, the hinge main body 31 in this embodiment is provided with a hinge hole 312 for the hinge shaft to pass through, and the hinge shaft radial relief groove 314 are provided on both sides of the hinge hole 312. As shown in Fig. 5, in the case that the hinge shaft is inserted into the hinge hole 312 to connect with the hinge main body 31, the hinge shaft radial relief groove 314 forms a gap at both radial sides of the hinge hole 312, thus a radial relief structure is realized when the hinge main body 31 moves relative to the hinge shaft, and the hinged main body 31 can be ensured to swing relative to the hinge member 11.

Furthermore, an upper surface of the protrusion 311 is an inclined plane 3111 that inclines from the center to the two sides and from high to low with the hinge shaft as the center, and the inclined plane 3111 is perpendicular to a swing plane. The swing plane is a plane parallel to the hinge shaft for the temple 2 to swing relative to the spectacle frame 1. As shown in Fig. 2, the swing plane M is parallel to the hinge shaft, and when the hinge main body 31 swings relative to the spectacle frame 1 in the swing plane M, the temple 2 is driven to swing relative to the spectacle frame 1 in the swing plane M. Since the inclined surface 3111 on the protrusion 311 of the hinge main body 31 is perpendicular to the swing plane M, a further swing is limited, thus the hinged main body 31 is prevented from deflecting along the axial direction of the temple 2 to cause the eyeglasses to deform and affect the swing effect. A chamfer is provided at a connection point of the middle part of the protrusion 311 and the inclined surface. The structure is simple, which enables the protrusion 311 to transit smoothly when swinging, and the swing is smoother. Besides, when it swings to the position that the inclined surface of the protrusion 311 fits with the side wall of the hinge groove 314, the swing stops, which effectively avoids damages to the temples and helps prolong the service life of the glasses.

The temple connecting assembly 3 in the present embodiment includes the hinge main body 31, and also includes a sleeve 32 movably mounted on the hinge main body 31. A reset mechanism 33 for driving the hinge body 31 to reset is provided between the hinge body 31 and the sleeve 32. When the temple 2 is subjected to a outwards swinging force, since the sleeve 32 is fixedly connected to the temple 2, the sleeve 32 drives the temple 2 to move relative to the hinged main body 31, so that there is a space for swinging between the temple 2 and the spectacle frame 1, thereby avoiding damages to the temple 2 due to the inability to swing outward relative to the spectacle frame 1. When the external force is removed, the reset mechanism 33 drives the hinged main body 31 to reset, so that the temple 2 and the spectacle frame 1 return to the normal connection state. Since the hinge main body 31 and the sleeve 32 are movably connected, and the reset mechanism 33 is arranged between the hinge main body 31 and the sleeve 32, the temples 2 can be expanded without being damaged, and can be restored to the normal state with the help of elastic force, which avoids deformation or even damage of glasses, and is conducive to improve the user's experience.

The temple connecting assembly 3 of the present embodiment can swing in multiple angles, such as up and down, inside and outside, relative to the frame 1, making it more comfortable for users to wear. The swing angles and amplitude can be adjusted according to the user's needs, meeting the needs of different users.

Furthermore, the reset mechanism 33 comprises a first stopper 331 and a second stopper 332 provided on the hinge main body 31. A return spring 333 is arranged between the first stopper 331 and the second stopper 332, and one end of the sleeve 32 is slidably arranged between the first stopper 331 and the return spring 333. When the temple 2 is forced to swing outwards, the sleeve 32 moves relative to the hinge body 31 and drives the return spring 333 to compress, so that the return spring 333 stores elastic energy. When the external force is removed, the return spring 333 restores its deformation and drives the sleeve 32 to move, so that the hinge main body 31 can be reset. The structure is simple, the resetting effect is well, and the glasses can be expanded without being damaged.

Furthermore, the temple 2 is provided with a mounting cavity 21, and the temple connecting assembly 3 is provided within the mounting cavity 21. A built-in installation structure is adopted in the present embodiment, which has few restrictions on the appearance design of the finished glasses and has high versatility.

The embodiment is provided with an easy disassembly and assembly installation structure, and the installation structure and principle are as follows:

The temple 2 is provided with a disassembly hole 22 for connecting with the mounting cavity 21 on a side wall of the temple 2, the sleeve 32 is provided with an elastic hook 321 that is engaged with the disassembly hole 22, and the hinge main body 31 is provided with a relief groove 313 that matches with the elastic hook 321. When the temple 2 is connected to the spectacle frame 1, the hinge main body 31 moves away from the mounting cavity 21, so that the relief groove 313 is misaligned with the elastic hook 321 and the disassembly hole 22. When the temple 2 is disconnected from the spectacle frame 1, the hinge main body 31 moves in a direction of entering the mounting cavity 21, so that the relief groove 313 is align with the elastic hook 321 and the disassembly hole 22. This embodiment adopts an easy disassembly and assembly installation structure, which is realized through clamping the elastic hook 321 with the disassembly hole 22. By using a cylindrical member to extend into the disassembly hole 22 and then press the elastic hook 321 to deform it to realize disassembly, which has simple structure and is convenient for installation. Moreover, when the temple connecting assembly 3 is damaged, the temple connecting assembly 3 can be easily taken out for repair or replacement, thus the cost of production and maintenance is low, and unnecessary waste of resources is effectively reduced.

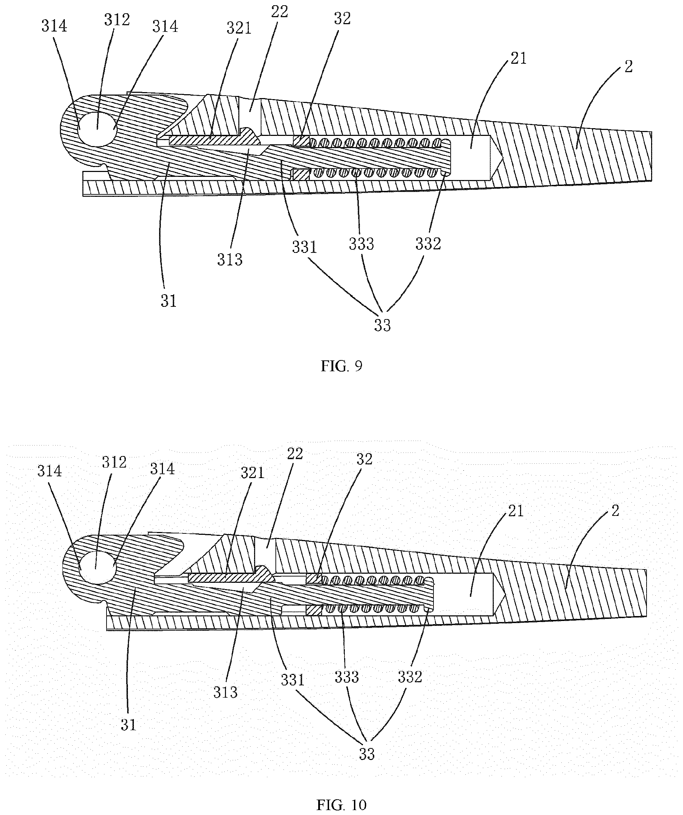

In the easy disassembly and assembly installation structure provided in this embodiment, when installing the temple connecting assembly 3, the hinge main body 31, the sleeve 32 and the return spring 333 are first assembled and then inserted together into the mounting cavity 21 in the temple 2, so that the elastic hook 321 in the sleeve 32 is matched with the disassembly hole 22, thus the sleeve 32 is fixedly connected with the temple 2. In this case, the hinge main body 31 can move relative to the sleeve 32. When the temple connecting assembly 3 is connected to the spectacle frame 1, the hinge main body 31 is pulled out for a certain distance for assembly. After assembly, the relief groove 313 is misaligned with the elastic hook 321 and the disassembly hole 22, as shown in Figure 10. When the temple connecting assembly needs to be dismantled for maintenance or replacement, the hinge main body 31 is first disconnected with the spectacle frame 1, so that the hinged body 31 moves under the drive of the reset mechanism 33, thus the relief groove 313 is align with the elastic hook 321 and the disassembly hole 22, as shown in Figure 9. In this case, the cylindrical member is inserted into the disassembly hole 22 to press the elastic hook 321, so that the elastic hook 321 is deformed and disconnected from the disassembly hole 22, and then the whole temple connecting assembly can be taken out from the temple 2. With this misaligned assembly structure, when the user directly inserts the cylindrical member into the disassembly hole 22, the temple connecting assembly 3 and the temple 2 cannot be separated. Only by first disengaging the connection between the temple connecting assembly 3 and the spectacle frame 1, and then inserting a cylindrical member into the disassembly hole 22, can the connection between the temple connecting assembly 3 and the temple 2 be effectively released. This can effectively prevent the misoperation of the user from causing the temple 2 and the temple connecting assembly 3 to separate, which is conducive to improve the user's experience.

Furthermore, the elastic hook 321 is provided with an oblique pushing surface, so that the elastic hook 321 can enter the mounting cavity 21 easily. The elastic hook 321 includes a connecting portion and a hooking portion, and the hooking portion faces the outside of the sleeve 32 to facilitate connection with the disassembly hole 22 in the temple 2. The hooking portion of the elastic hook 321 is also provided with a flat surface for pressing, so that the elastic hook 321 receives a more uniform force when pressed.

Furthermore, the relief groove 313 is provided with an inclined bottom surface that matches with the elastic hook 321, so as to better accommodate the elastic hook 321.

Furthermore, the hinge main body 31 includes a first mounting part 310 for hinged connection with the spectacle frame 1 and a second mounting part 320 for connecting with the temple 2. The sleeve 32 is provided with an installation groove 322, into which the first mounting part 310 is embedded, and the sleeve 32 is provided with limiting blocks 323 on both sides of the installation groove 322. During installation, the sleeve 32 is sleeved outside the second mounting part 320, one end of the sleeve 32 is connected with the return spring 333, and the other end is connected with the first mounting part 310. The first mounting part 310 is embedded in the installation groove 322, and the limiting blocks 323 are provided on both sides of the first mounting part 310, which can effectively limit the first mounting part 310, so as to avoid the problem that the elastic hook 321 cannot be matched with the relief groove 313 due to the rotation of the first mounting part 310, thus to improve the structural stability.

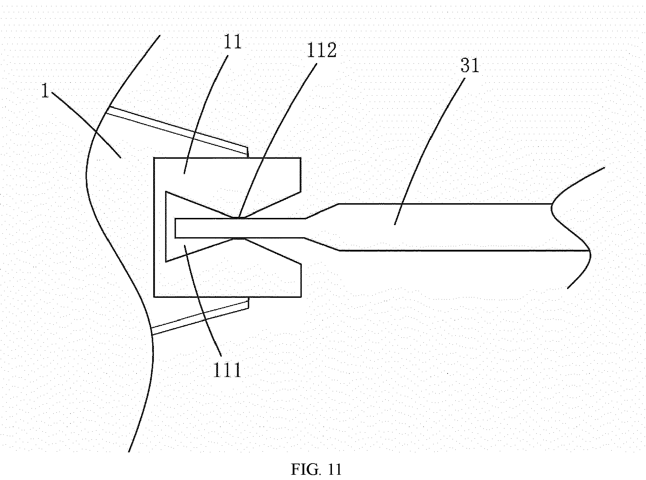

Embodiment 2: As shown in Figure 11, the difference between this embodiment and Embodiment 1 lies in the temple swing mechanism, in the temple swing mechanism of this embodiment, the hinge member 11 is provided with a hinge groove 111, and the hinge main body 31 is hinged in the hinge groove 111 and can swing relative to the spectacle frame 1 along a plane parallel to the hinge shaft. The hinge member 11 is provided with protrusions 112 protruding towards the hinge groove 111 along the axial direction of the hinge shaft, preventing an axial play of the temple 2 along the hinge shaft. The hinge main body 31 or the hinge groove 111 is provided with a hinge shaft radial relief groove on the side wall, so that the hinge main body 31 can swing relative to the hinge member 11, so as to meet both the wearing and swinging needs of customers, and to improve the user's experience.

Although the embodiments of the present invention have been illustrated and described, those of ordinary skill in the art can understand that various changes, modifications, substitutions and variants can be made to these embodiments without departing from the principle of the present invention. The scope of the present invention is defined by the appended claims and their equivalents.

## Claims

1. A spectacle frame and temple connecting mechanism, comprising a hinge member (11) arranged on a spectacle frame (1), wherein a temple connecting assembly (3) for connecting the temple (2) is hinged on the hinge member (11), at a hinge joint between the temple connecting assembly (3) and the hinge member (11), a temple swing mechanism that enables the temple (2) to swing relative to the spectacle frame (1) along a plane parallel to a hinge shaft is provided,
the temple swing mechanism enables the temple (2) to swing relative to the spectacle frame (1) along a plane parallel to the hinge shaft and prevents an axial play of the temple (2) along the hinge shaft,
the temple swing mechanism includes:
a hinge groove (111) arranged on the hinge member (11);
a hinge main body (31) hinged in the hinge groove (111), which is able to swing relative to the spectacle frame (1) along the plane parallel to the hinge shaft;
protrusions (311) provided on both sides of the hinge main body (31) along the axial direction of the hinge shaft and supported between inner walls of the hinge groove (111), which prevents the axial play of the temple (2) along the hinge shaft;
a hinge shaft radial relief groove (314) provided on the hinge main body (31) or a side wall of the hinge groove (111), which enables the hinge main body (31) to swing relative to the hinge member (11),
**characterized in that**, the temple connecting assembly (3) includes the hinge main body (31), and also includes a sleeve (32) movably mounted on the hinge main body (31); a reset mechanism (33) for driving the hinge body (31) to reset is provided between the hinge body (31) and the sleeve (32),
the reset mechanism (33) comprises a first stopper (331) and a second stopper (332) provided on the hinge main body (31), a return spring (333) is arranged between the first stopper (331) and the second stopper (332), and one end of the sleeve (32) is slidably arranged between the first stopper (331) and the return spring (333),
the temple (2) is provided with a mounting cavity (21), and the temple connecting assembly (3) is provided within the mounting cavity (21),
the temple (2) is provided with a disassembly hole (22) connecting with the mounting cavity (21) on a side wall of the temple (2), the sleeve (32) is provided with an elastic hook (321) that is engaged with the disassembly hole (22), and the hinge main body (31) is provided with a relief groove (313) that matches with the elastic hook (321);
when the temple (2) is connected to the spectacle frame (1), the hinge main body (31) moves away from the mounting cavity (21), so that the relief groove (313) is misaligned with the elastic hook (321) and the disassembly hole (22);
when the temple (2) is disconnected from the spectacle frame (1), the hinge main body (31) moves in the direction of entering the mounting cavity (21), so that the relief groove (313) is align with the elastic hook (321) and the disassembly hole (22).

2. The spectacle frame and temple connecting mechanism according to claim 1, **characterized in that**, the hinge main body (31) is provided with a hinge hole (312) for the hinge shaft to pass through, and the hinge shaft radial relief groove (314) is provided on both sides of the hinge hole (312).

3. The spectacle frame and temple connecting mechanism according to claim 1, **characterized in that**, an upper surface of the protrusion (311) is an inclined plane (3111) that inclines from the center to the two sides and from high to low with the hinge shaft as the center, and the inclined plane (3111) is perpendicular to a swing plane.

4. The spectacle frame and temple connecting mechanism according to claim 1, **characterized in that**, the protrusions (112) are provided on the hinge member (11) and protruding towards the hinge groove (111) along the axial direction of the hinge shaft, instead of being provided on both sides of the hinge main body (31), which prevents the axial play of the temple (2) along the hinge shaft.

5. A pair of eyeglasses, including a spectacle frame (1) and at least one temple (2), **characterized in that**, further includes a spectacle frame and temple connecting mechanism as described in anyone of claims 1-4.

## Patentansprüche

1. Mechanismus zur Verbindung eines Brillengestells mit einem Bügel, umfassend ein Scharnierelement (11), das an einem Brillengestell (1) angeordnet ist, wobei eine Bügelverbindungsbaugruppe (3) zum Verbinden des Bügels (2) auf einer Scharnierverbindungstelle zwischen der Bügelverbindungsbaugruppe (3) und dem Scharnierelement (11) an dem Scharnierelement (11) angelenkt ist, wobei ein Bügelschwenkmechanismus vorgesehen ist, der es dem Bügel (2) ermöglicht, relativ zum Brillengestell (1) entlang einer zur Scharnierwelle parallelen Ebene zu schwenken,
wobei der Bügelschwenkmechanismus es dem Bügel (2) ermöglicht, relativ zum Brillengestell (1) entlang einer zur Scharnierwelle parallelen Ebene zu schwenken und ein axiales Spiel des Bügels (2) entlang der Scharnierwelle zu verhindern,
wobei der Bügelschwenkmechanismus umfasst:
eine Scharniernut (111), die am Scharnierelement (11) angeordnet ist;
einen in der Scharniernut (111) angelenkten Scharnierhauptkörper (31), der relativ zum Brillengestell (1) entlang der zur Scharnierwelle parallelen Ebene schwenken kann;
Vorsprünge (311), die auf beiden Seiten des Scharnierhauptkörpers (31) entlang der axialen Richtung der Scharnierwelle vorgesehen sind und sich zwischen den Innenwänden der Scharniernut (111) abstützen, was das axiale Spiel des Bügels (2) entlang der Scharnierwelle verhindert; und
eine radiale Entlastungsnut (314) der Scharnierwelle, die am Scharnierhauptkörper (31) oder an einer Seitenwand der Scharniernut (111) vorgesehen ist und es dem Scharnierhauptkörper (31) ermöglicht, relativ zum Scharnierelement (11) zu schwenken,
**dadurch gekennzeichnet, dass** die Bügelverbindungsbaugruppe (3) den Scharnierhauptkörper (31) und auch eine Hülse (32) umfasst, die beweglich auf dem Scharnierhauptkörper (31) angebracht ist; wobei zwischen dem Scharnierhauptkörper (31) und der Hülse (32) ein Rückstellmechanismus (33) zum Antreiben des Scharnierhauptkörpers (31) zum Rückstellen vorgesehen ist,
dass der Rückstellmechanismus (33) einen ersten Stopper (331) und einen zweiten Stopper (332) umfasst, die auf dem Scharnierhauptkörper (31) vorgesehen sind, wobei eine Rückstellfeder (333) zwischen dem ersten Stopper (331) und dem zweiten Stopper (332) angeordnet ist und ein Ende der Hülse (32) verschiebbar zwischen dem ersten Stopper (331) und der Rückstellfeder (333) angeordnet ist,
dass der Bügel (2) mit einem Montagehohlraum (21) versehen ist, in dem die Bügelverbindungsbaugruppe (3) vorgesehen ist,
dass der Bügel (2) mit einem Demontageloch (22) an einer Seitenwand des Bügels (2) versehen ist, das mit dem Montagehohlraum (21) verbunden ist, wobei die Hülse (32) mit einem elastischen Haken (321) versehen ist, der mit dem Demontageloch (22) in Eingriff steht, und wobei der Scharnierhauptkörper (31) mit einer Entlastungsnut (313) versehen ist, die mit dem elastischen Haken (321) zusammenpasst;
wobei sich der Scharnierhauptkörper (31) vom Befestigungshohlraum (21) weg bewegt, wenn der Bügel (2) mit dem Brillengestell (1) verbunden wird, so dass die Entlastungsnut (313) mit dem elastischen Haken (321) und dem Demontageloch (22) nicht ausgerichtet ist;
wobei sich der Scharnierhauptkörper (31) in Richtung des Eintritts in den Montagehohlraum (21) bewegt, wenn der Bügel (2) von dem Brillengestell (1) getrennt wird, so dass die Entlastungsnut (313) mit dem elastischen Haken (321) und dem Demontageloch (22) ausgerichtet ist.

2. Mechanismus zur Verbindung eines Brillengestells mit einem Bügel nach Anspruch 1, **dadurch gekennzeichnet, dass** der Scharnierhauptkörper (31) mit einem Scharnierloch (312) versehen ist, durch das die Scharnierwelle hindurchgeführt wird, und dass die radiale Entlastungsnut (314) für die Scharnierwelle auf beiden Seiten des Scharnierlochs (312) vorgesehen ist.

3. Mechanismus zur Verbindung eines Brillengestells mit einem Bügel nach Anspruch 1, **dadurch gekennzeichnet, dass** eine obere Fläche des Vorsprungs (311) eine geneigte Ebene (3111) ist, die sich von der Mitte zu den beiden Seiten und von hoch nach unten neigt, wobei die Scharnierwelle die Mittelpunkt bildet und die geneigte Ebene (3111) senkrecht zu einer Schwingungsebene ist.

4. Mechanismus zur Verbindung eines Brillengestells mit einem Bügel nach Anspruch 1, **dadurch gekennzeichnet, dass** die Vorsprünge (112) auf dem Scharnierelement (11) vorgesehen sind und in Richtung der Scharniernut (111) entlang der axialen Richtung der Scharnierwelle vorstehen, anstatt auf beiden Seiten des Scharnierhauptkörpers (31) vorgesehen zu sein, was das axiale Spiel des Bügels (2) entlang der Scharnierwelle verhindert.

5. Brille, umfassend einen Brillengestell (1) und mindestens einen Bügel (2), **dadurch gekennzeichnet, dass** sie ferner einen Mechanismus zur Verbindung des Brillengestells (1) mit dem Bügel (2) nach einem der Ansprüche 1 bis 4 aufweist.

## Revendications

1. Mécanisme de liaison de monture de lunettes et de branche comprenant un élément de charnière (11) disposé sur une monture (1), où un ensemble de connexion de branche (3) destiné à relier la branche (2) est articulé sur l'élément de charnière (11), à un j oint de charnière entre l'ensemble de connexion de branche (3) et l'élément de charnière (11), un mécanisme de pivotement de branche qui permet à la branche (2) de pivoter par rapport à la monture (1) de lunettes le long d'un plan parallèle à un arbre de charnière est fourni,
le mécanisme de pivotement de branche permet à la branche (2) de pivoter par rapport à la monture (1) de lunettes selon d'un plan parallèle à l'axe de la charnière, empêchant un j eu axial de la branche (2) le long de l'axe de la charnière,
le mécanisme de pivotement de branche comprend :
une rainure de charnière (111) disposée sur l'élément de charnière (11);
un corps principal de charnière (31) articulé dans la rainure de charnière (111), qui peut pivoter par rapport à la monture (1) de lunettes le long du plan parallèle à l'arbre de charnière ;
des saillies (311) situées de part et d'autre du corps principal de charnière (31) le long de la direction axiale de l'arbre de la charnière et supportées entre les parois intérieures de la rainure de charnière (111), qui empêchent le jeu axial de la branche (2) le long de l'arbre de la charnière ;
une rainure de décharge radial de l'arbre de charnière (314) située sur le corps principal de charnière (31) ou sur une paroi latérale de la rainure de charnière (111), permettant au corps principal de charnière (31) de pivoter par rapport à l'élément de charnière (11),
**caractérisé par le fait que** l'ensemble de connexion de branche (3) comprend le corps principal de charnière (31) et également un manchon (32) mobile monté sur le corps principal de charnière (31); un mécanisme de réinitialisation (33) pour entraîner le corps principal de charnière (31) à se réinitialiser est prévu entre le corps principal de charnière (31) et le manchon (32),
le mécanisme de réinitialisation (33) comprend une première butée (331) et une deuxième butée (332) placées sur le corps principal de charnière (31), un ressort de rappel (333) placé entre la première butée (331) et la deuxième butée (332), et une extrémité du manchon (32) placée de manière coulissante entre la première butée (331) et le ressort de rappel (333),
la branche (2) comprend une cavité de montage (21), et l'ensemble de connexion de branche (3) est placé à l'intérieur de la cavité de montage (21),
la branche (2) est pourvue d'un trou de démontage (22) reliée à la cavité de montage (21) sur une paroi latérale de la branche (2), le manchon (32) est pourvu d'un crochet élastique (321) engagé dans le trou de démontage (22), et le corps principal de charnière (31) est pourvu d'une rainure de dégagement (313) alignée avec le crochet élastique (321);
lorsque la branche (2) est reliée à la monture (1) de lunette, le corps principal de charnière (31) s'éloigne de la cavité de montage (21), de sorte que la rainure de dégagement (313) est désalignée avec le crochet élastique (321) et le trou de démontage (22);
lorsque la branche (2) est déconnectée de la monture (1) de lunette, le corps principal de charnière (31) se déplace dans le sens de l'entrée dans la cavité de montage (21), de sorte que la rainure de dégagement (313) est alignée avec le crochet élastique (321) et le trou de démontage (22).

2. Le mécanisme de liaison de monture de lunettes et de branche selon la revendication 1 est **caractérisé par le fait que** le corps principal de charnière (31) est pourvu d'un trou de charnière (312) pour le passage de l'arbre de charnière, et la rainure de décharge radiale de l'arbre de charnière (314) est prévue de part et d'autre du trou de charnière (312).

3. Le mécanisme de liaison de monture de lunettes et de branche selon la revendication 1 est **caractérisé par le fait qu'**une surface supérieure de la saillie (311) est un plan incliné (3111) qui s'incline du centre vers les deux côtés et de haut en bas avec l'arbre de la charnière comme centre, et le plan incliné (3111) est perpendiculaire à un plan d'oscillation.

4. Le mécanisme de liaison de monture de lunettes et de branche selon la revendication 1, est **caractérisé par le fait que** les saillies sont placées sur l'élément de charnière (11) et font saillie (112) vers la rainure de charnière (111) le long de la direction axiale de l'arbre de charnière, au lieu d'être placées de part et d'autre du corps principal de charnière (31), ce qui empêche le jeu axial de la branche (2) le long de l'arbre de charnière.

5. Paire de lunettes comprenant une monture (1) et au moins une branche (2), unique en ceci qu'elle comprend en outre un mécanisme de liaison de monture de lunettes et de branche tel que décrit dans l'une des revendications 1 à 4.
